# EUROPEAN PATENT APPLICATION

(11) **EP 1 982 958 A1**
(43) Date of publication of application: **22.10.2008**
(21) Application number: 06755374.3
(22) Date of filing: 24.05.2006
(51) Int. Cl.: C02F 1/04, C02F 1/44

(54) **PLANT FOR THE DESALINATION/PURIFICATION OF BRACKISH WATER AND INDUSTRIAL WASTE WITH ZERO LIQUID DISCHARGE**

(30) Priority: 06.02.2006 ES 200600257
(71) Applicant: DESALACION INTEGRAL SYSTEMS, S.L., 30008 Murcia (ES)
(72) Inventor: CLAVEL ESCRIBANO, Jose, E-30008 Murcia (ES)
(74) Representative: Munoz Garcia, Antonio
(86) International application number: PCT/ES2006/000291
(87) International publication number: WO 2007/090905

(57) **Abstract**

The invention relates to a plant for the desalination/purification of brackish water and industrial waste with zero liquid discharge, including reverse osmosis (1 and 9) or filtering (20) modules, containers for receiving waste (18), a centrifugal module (6), dryers (7 and 17), a heating circuit (11) and high-vacuum chambers (14) fitted with ejectors (15) that are supplied with fresh water as a driving fluid. The invention also includes an internal combustion engine (12) which is connected to an alternator (19) in order to produce electric power. The invention takes the from of a combined heat and power plant which, in addition to producing the power necessary for the operation of the drinking water production plant, can also produce excess electric power to be transferred to the grid, by harnessing the heat energy of the exhaust gases and the cooling of the engine (12) in order to heat the closed heating circuit (11) using exchangers and to heat the air from the dryers (17) using air generators.

## Description

### OBJECT OF THE INVENTION

The invention relates to, as expressed in the work specification, a plant for the desalination/purification brackish water and industrial waste with zero liquid discharge, whose aim is to achieve fresh and drinking water by means of the desalination or purification of water from different origins, without generating any liquid residuals, thus totally solving the environmental problems presented by brine in the case of desalination, and on the other hand by industrial residuals or waste, which when solidified after their passage through the plant can be used to advantage in different application; integrating for this processes of reverse osmosis (RO) or filtering with complex chemical treatments of the brines or waste and with centrifugal and high vacuum processes, generating the environmental advantages of use and production of electric power and the heat from the cooling and waste water from the engine.

More specifically, the aim of the invention is a desalination-purification plant that combines the aforementioned processes which achieving, at an affordable price, fresh water of excellent quality, energy of a sufficient volume so that it is profitable to export it to the network and thus compensate all the energy and calories costs of the rest of the process, thanks to the optimisation achieved with the system, and the solid control of waste that could damage the environment, and which can then be valued to be commercialised.

### INVENTION FIELD

The field of application of the invention is in the industry for the development of drinking water, desalination or purification plants.

### BACKGROUND INFORMATION REGARDING THE INVENTION

The applicant is aware of the existence today of desalination methods of brackish waters and seawater and purification of industrial waters from different origins.

Today there is an urgent need for water on earth due to the climatic changes currently taking place and the over development and contamination of aquifers, which means that there is less drinking water every day, not only for human consumption, but also for other uses, such as for agricultural and industrial purposes.

With the means available today, the cost per cubic metre of desalinated or purified water is quite high, as they require significant quantities of energy for these processes.

To this we must add the increasing lack of fossil fuel, making it necessary to develop technologies to cheapen the cost of obtaining water, taxed in the case of purification of industrial waste waters, by the obligatory canon that dumping companies must pay, and by the increasingly high salt content of these waste waters, as well as those of the industry, that current purification processes cannot resolve everything.

The most common way to eliminate said industrial waste is usually by means of dumping pipes (after basic purification in some industries which do not completely resolve the content of salts and other components in the waste), in sewers, sea or rivers, where areas of significant contamination has been observed around the sewage pipes of said purification plants, due to the incomplete purification and that much of these semi-purified waters also contain large concentrations of salts and chemical products which must be added to the water before and after their purification, and thus cannot be used again, even for agricultural irrigation, and must be sent to the sea or rivers after having invested important sums of money in their purification and having also paid significant industrial quantities for the established contaminated industrial waste outlet.

In the case of desalination, amongst others, new procedures based on the osmotic pressure, developing reverse osmosis cells called membranes, with which, the cost of the cubic metre of desalinated water has dropped in accordance to the development of new materials for the manufacture of these membranes and other elements that intervene in the RO process, although there is still a significant difference between the cost of desalinating brackish water and that of sea waters, in detriment of the latter.

The preliminary or basic treatments for treating sea water by RO, increase the power cost and decrease the plant's production performance, along with the serious problem of rejection or brine, which are highly contaminant.

This problem is worsened in interior brackish wells where it is impossible to get rid of the brine.

The most common way of eliminating brine is by means of brine conducts with dumping in the sea or rivers, where the creation of naturally dead zones has been observed around the sewage pipes of said RO plants given that this brine or reject also contains large salt concentrations, as well as a high quantity of chemical products that must be added to the water prior to and after its passage through the membranes.

The evident solution to the described environmental problem existing today, would be that of having a dual integral desalination plant with zero liquid discharge which would avoid this problem.

It is worth mentioning that as a result, the applicant is unaware of the existence of desalination-purification plant for brackish water and industrial discharge with zero liquid discharge that combines the described processes and offers technical, structural and incorporative characteristics that are similar to those of this invention, whose aim is to resolve the aforementioned inconveniences of current systems for this same purpose.

### EXPLANATION OF THE INVENTION

The desalination-purification plant for brackish waters and industrial waste with zero liquid discharge proposed by the invention is in itself an evident novelty within its field of application, as according to its installation and use, we precisely manage to give a complete solution to the aforementioned problem, with advantageous cost savings.

More precisely, the plant incorporates a series of modules, which based on the function of their application as a water desalination plant or purification of industrial waters, respective options for alternatives, vary slightly, being basically made up by a group of deposits with input for fluid to be treated and two outlets, one for purified water and another for waters, which are suitable interconnected through the pertinent conducts and pumping systems for transporting the waste. There is also a centrifuge module, dryers, powered by the hot air produced by the cogeneration engine and transported by air generators, and deposits for solid waste, to which these arrive during a first or second phase of the process, with a heat circuit supplied by the heat of the refrigeration water of the aforementioned cogeneration engine by means of heat pipes and high vacuum chambers that have ejectors supplied by soft water coming from the same production as the engine water, to extract the vapours produced by boiling.

For the case of execution of the drinking water plant of the invention as a desalination plant, it is noteworthy that it incorporates the necessary elements for both phases of reverse osmosis, an initial and a subsequent one.

For this, the rejection of brine produced by the first reverse osmosis, it is transferred to deposits, and depending on the types of salts in its composition, certain physical and chemical principles are applied to separate the components that produce incrustation, which on the other hand, in a short amount of time would produce the disuse of the different elements of the process (reverse osmosis, exchangers, pumps, dryers), leaving the brine with only NaCL.

Said brine is sent to a second reverse osmosis and the waste produced by this, more concentrated that in the previous one, is sent to the heat circuit with different exchangers, passing from here to the high vacuum chambers where desalinated water is obtained as well as a very concentrated rejection of NaCl which proceeds to spraying dryer supplied by engine exhaust heat, thus forming common salt in powder form that is easily handled and can be recovered.

In turn, the incrusting salts, mainly with calcium and magnesium, precipitated in the application of physical and chemical principles, pass on to another dryer where the distilled water is condensed, and the dry salt obtained is bagged for the application of agricultural corrections or for its subsequent industrialisation and separation of its most commercial component.

In the case of an alternative use of the invention plant for purifying industrial waters, RO steps consisting in the first step in a filtration in which the raw water is pumped from the input point and chemically conditioned is eliminated.

The solid waste produced by said filtration is transferred to the deposits and as in the previous case, depending on the waste types in its composition, physical and chemical principles are applied to separate these solid components, being aimed, after their centrifuging, to the dryer modules and ensilaged in deposits for this purpose for their subsequent assessment or to the dump in case they cannot be assessed.

The waste water with solid elements is chemically conditioned and sent to the heat circuit where it is heated, as has been mentioned, by means of exchangers, before entering the high vacuum chambers in which instant evaporation is produced, and this vapour is pulled by the flow of the engine fluids of the ejectors, thus obtaining high quality distilled water and a very concentrated waste of treated industrial waste, which passed through the dryers' module, creating dry waste than can be easily handled and can be recovered.

It is worth point out that the desalination-purification plant of brackish waters and industrial waste with zero liquid discharge of the invention, a higher quantity of fresh water is obtained advantageously with a higher quantity of fresh water from the raw water flow and an end solid waste that is easily handled and assessed, as well as the use of materials and more rational and homologated processes, with lengthening of their useful life thanks to the chemical and physical treatments of separation of encrusted salts that are done.

On another hand, the desalination-purification plant integrates the whole process in a single system which one optimising energy is configured as a cogeneration plant with a significant surplus of energy to be exported to the grid, thus compensating the power costs of the different processes such as reverse osmosis and the different pumps, as well as the necessary residual heat for applying the thermal power to increase the water flow temperature entering the high vacuum chambers, and for the hot air of the dryers that is necessary for drying the salt or waste produced.

Returning to the case of using the invention as a desalination plant, it is worthy to mention that the water to be desalinated, before entering the reverse osmosis (RO) module, whose object is the inhibition of precipitation of not very soluble salts, by means of dosing the acid and inhibitor, carrying out said dosing by means of dosing pumps, usually magnetic membrane.

This pre-treatment is aimed at protecting the membranes of the RO module and to avoid excessive frequency of chemical cleaning of the same, avoiding precipitation in the form of encrusting salts on the surface.

At times, and depending on the quality of the feed waters, it is necessary to disinfect by means of biocide which is normally a chlorine component, and as the membranes of osmosis are sensitive to the effect of chlorine, it is later used as a product to neutralise the oxidising effect of the chlorine.

The physical pre-treatment is normally carried out through filtering in a sand bed, followed by microfiltration with polypropylene cartridges with suitable selectivity, and thus all possible undesirable substances are eliminated, suspended particles and colloids which could enter the feed water.

Once the physical-chemical pre-treatment is done, the conditioned feed water is aimed at the high pressure pump unit, which is formed by a motor pump group, normally of multi-step type centrifuge, driving the water towards the membranes at variable pressure depending on the salinity of feed water, calculating it on each case.

To avoid damage to the high pressure pumps, protection devices are installed, both upstream water of the pump through pressure controllers that detect falls in pressure such as downstream waters which detect excess pressures that could irreversible damage the reverse osmosis membranes.

The RO unit is formed by banks consisting of pressure tubes which accommodate the membrane elements and each pressure tube has an inlet and two outlets, one for permeates and another for the reject or brine.

Even when the membranes are protected to the maximum, it is necessary to periodically carry out chemical washes to restore the production values of the same, which with use are biologically solutionised or become silted with salts. Said chemical wash is carried out by means of chemical cleaning product pump system.

Part of the permeate or water from the osmosis is sent to a deposit that is used for storage so that in the event of a stoppage of the plant, sluicing of the existent brine can be executed in the pressure tubes, diluting it with product water, thus protecting the reverse osmosis membranes.

The rejection or brine flow is sent to storage tanks, where it is submitted to chemical and physical principles for separating its encrusted salt components, depending to the quality of the waters, but which normally is carried out as follows:
a) In waters with high bicarbonate content, the following processes are applied:
   - a distinctly cold alkalisation chemical process.
   - or a mixed process of elimination of CO2 in cold and/or vacuum, followed by alkalinisation.
   - or a distinctly physical application process in cold and/or vacuum.
   Based on the calcium and magnesium content that the salt waters contain as well as the mutual proportion ration in both cations.
b) In waters with high sulphate content, the following process are applied:
   During a first phase, a selective precipitation of unhealthy and this encrusting components is carried out, or on the contrary, this step is excluded for replaced in a final phase according to two alternatives:
   - They are precipitated in the phase prior to obtaining the crystallised sodium chloride.
   - or precipitate them in an intermediary phase of the final crystallisation step, either as calcium sulphate or sodium sulphate.

Based on the calcium and magnesium content that the salt water contains, as well as the proportion ratio of both cations.

It is noteworthy that both residual brine separation schemas of the process for obtaining soft water from brackish water are possible.

From this process, a flow of precipitations of calcium salts and encrusted magnesium is obtained.

Brine water with encrusted salts. The concentrated brine with encrusted salts is sent to a deposit where it is then subjected to a centrifugal process and then dried. The surplus water is sent to the brine deposit with sodium chlorine.

This brine flow, only with sodium chlorine, is sent to a deposit where through a high-pressure pump it is sent to a second reverse osmosis unit.

The reject flow of the second RO is sent to a storage deposit where it is then sent to a heat circuit by the heat of the refrigeration water of the plant's engine, then sent to the vacuum module, where high vacuum is produced by means of two ejectors, thus achieving the ideal temperature and pressure conditions for boiling the brine. This results in obtaining distilled water on the one hand and a continually more concentrated reject of sodium chlorine brine, which is sent to a very concentrated brine when it reaches a certain concentration level.

This brine is pumped to the treatment dryers powered by hot exhaust air from the engine, from where the water vapour is used by condensation in the form of distilled water, eliminating all the liquid residues, obtaining a solid residue that is easily handled and with the possibility of recovery of chemical elements, with adequate processes, and that can be assessed.

Advantageously, all the necessary power, both for the two reverse osmosis processes, in the case of desalination, the chemical processes, the centrifuge and the high vacuum in both cases, this is achieved by means of a cogeneration plant incorporated in the project.

Thus, the refrigeration engine water is fundamentally used to heat the existing heat circuit with exchangers, before entering the vacuum chambers, and the exhaust gases are used, by means of exchangers, to hear the air of the salt or residue dryers.

Sizing the cogeneration plant, though the generated residual heat, only 10% of the electric power produced is used to supply all the aforementioned processes, allowing the remaining 90% to be cogenerated and exported to the Grid.

The new desalination-purification plant of brackish water and industrial waste with zero liquid discharge thus represents an innovative structure of structural and constitutive characteristics unknown to now for such a purpose, reasons which when linked to the practical use, give it sufficient justification to obtain the requested exclusivity privilege.

### DESCRIPTION OF DRAWINGS

To complement the description herein detailed, and with the object of helping to provide better understanding of the invention's characteristics, we attach to this statement of specifications as an integral part of the same, a set of plans, with which though illustrations and not limiting to, we have represented the following:

Figure number 1.- Sample of a block diagram, a schematic representation corresponding to the elements that integrate the invention's plant as a desalination plant, as well as the processes carried out within, from the reverse osmosis (RO) treatments to the processes for the elimination of encrusted salts, to the recovery of salts by means of process of heat, high vacuum, centrifugation and drying.

Finger number 2.- .- Sample of a block diagram, a schematic representation corresponding to the elements that integrate the invention's plant in the form of an alternative use as a purifying plant of industrial waters, in which we also show the main components as well as the different processes that are applied within.

### PREFERENTIAL EXECUTION OF THE INVENTION

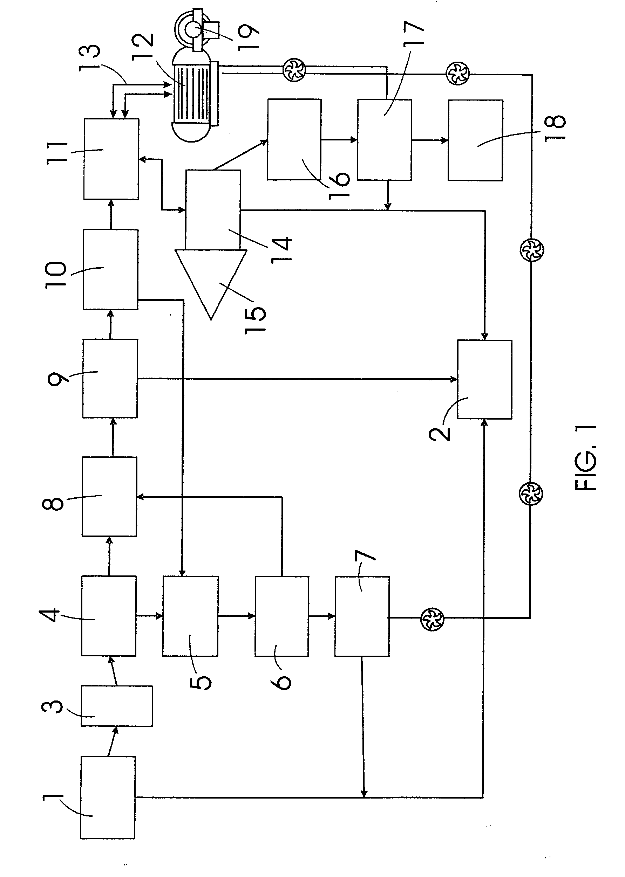

In the view of the said figures, and in accordance with the adopted numbering, one can observe that in figure 1, the plant, in its variant as a water desalination plant, in a first step consists of a reverse osmosis plant (1), which are pumped into from the sea or a well and which then circulate at a 4 bar pressure through a primary circuit in which different parameters are measures, conductivity, pH, temperature, to then pass onto said (RO) module (1), from where the produced soft water is sent to the main storage deposit (2) and the brine residues to another deposit (3) from where a flow of this brine is driven through a group of deposits (4) in which it will be subjected to different chemical treatments with the aim of freeing it of the encrusted salts that could damage the system.

These encrusted salts are sent to a deposit (5) to be then centrifuged in the centrifuge module (6) and afterwards to subject it in the dryers(7) to a drying process, and the surplus water of said centrifugation is sent to the deposit (8) for this purpose.

The brine that is free of encrusting salts in sent to the aforementioned deposit (8), to which the water obtained from the previous centrifugation process of module (6) is sent in parallel, as has been previously mentioned, to then subject it to another reverse osmosis process un a second plant (9), from which two flows depart, one of soft water which goes to the main storage deposit (2) and another concentrated brine flow does to a deposit (10) where it is subjected to a new chemical treatment to eliminate the possible remains of encrusted salts it contains.

These salts are sent to the deposit for this purpose (5), and the brine without any encrusted salt goes to the heat circuit (11), powered by the heat from the engine's refrigeration cogeneration water (12) by means of exchangers (13), and from here to the high vacuum chambers (14) where upon reaching the programmed temperature an important vacuum is produced by means of ejectors(15) powered by fresh water from the same production as the engine fluid, extracting the vapours produced by boiling the brine entering the chambers.

The non-evaporated brine water in the high vacuum chambers (14) circulated in the closed heat circuit (11), returning from these at the beginning of the circuit powered by the pumps, and does this circuit numerous times, so that once the adequate connectivity is reached, after successive evaporation processes, it is pumped to a concentrated brine deposit (16) named the brine lung.

This stored concentrated brine in said deposit (16) is pumped to the dryers module (17) which operates with hot air from the cogeneration engine exhaust gases (12) and transported be means of air generators.

The concentrated brine enters the dryers (17) through injectors that spray it, and on contact with the hot air, the brine water turns into vapour and when condensed is sent as distilled water to the main storage deposit (2) and the salt in powder form precipitates to the bottom of the dryers (17), and are then transported to a deposit or silo (18).

Part of said distilled water is used to carry out a "sweeping" in order to clean the possible particle of salt deposited throughout the circuit.

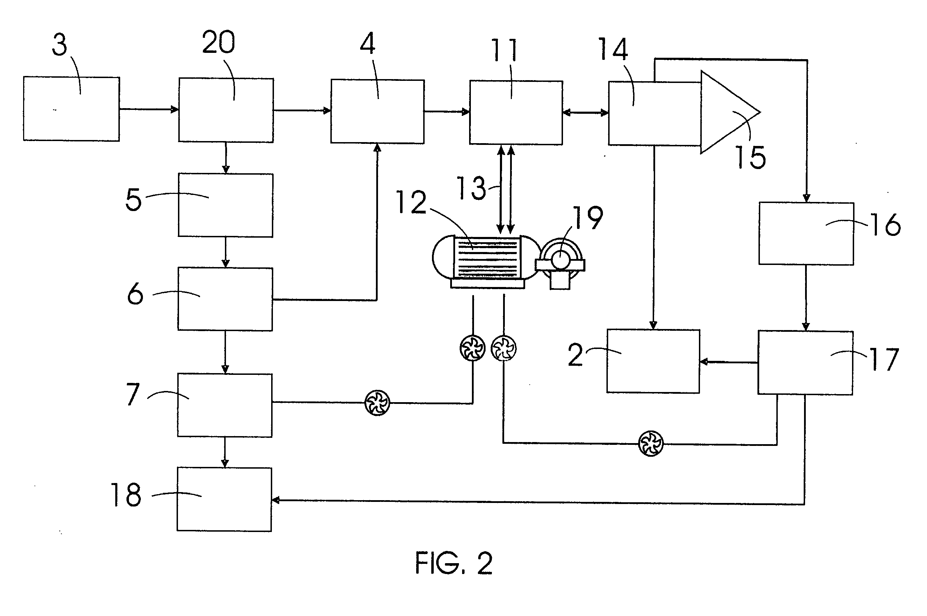

In figure 2, we can see how in the version of using the invention as an industrial water purification plant, the invention consists in an initial passage through a deposit (3) of industrial waters to be treated, from where they are sent to a filtration module (20), and the semi-solid residues are sent to the deposit (5) from where they move onto the centrifugation module (6), and from which these humid solids are sent to the dryers (7) to be subjected to a drying process and then sent to the final residue deposit (18) created for this purpose.

The industrial water free of solid residues is sent to the deposit (4), as are the liquids from the centrifugation phase carried out previously in module (6), to then be subjected to suitable chemical conditioning. From here the flow goes to the heat (11) circuit, powered, as described in the previous case, by the heat of the water of the cogeneration refrigeration water (12) by means of exchangers (13) and from here to the high vacuum (14) chambers where once the flow reaches the programmed temperature, a significant vacuum takes place by means of the ejectors (15) powered by fresh water from the same production as the engine fluid, extracting the vapours produced by boiling the input industrial residue in the high vacuum chambers (14); sending the produced fresh water to the main storage deposit (2) and that if the very concentrated residue to the deposit (16) from where it goes to the dryers (17) powered by hot air produced by the engine (12) and transported by air generators.

From here the water vapour still containing industrial residue is condensed, evaporates and is sent as distilled water to the main storage deposit (2) and the dry residue to the solid residue deposit (18) where it is packaged in large bags to be sold if it is valuable or sent to a dump in a controlled manner.

As has been mentioned, the invention has a power unit comprising a combustion engine (12), which is connected to an alternator (19) to produce electric power, thus configuring it as a cogeneration plant, achieved with said engine (12), as well as the necessary power for operating the plant, it produces significant surplus power which can be exported to the Grid, taking advantage of the thermal power of the exhaust gases and the refrigeration of the engine to heat the closed heat circuit (11) and to heat the air in the dryers (17).

Having sufficiently described the nature of this invention, as well as its operation, we highlight that within its essential scope, it could also be implemented in other forms different in detail to those indicated for purposes of example, and for which it would also reach the same protection once its fundamental principal is not altered, changed or modified.

## Claims

1. DESALINATION-PURIFICATION PLANT OF BRACKISH WATER AND INDUSTRIAL WASTE WITH ZERO LIQUID DISCHARGE, of the type destined to the production of fresh and drinkable water by means of desalination or purification of waters from different origins without generating any liquid residue, **characterised by** the fact of having a series of reverse osmosis or filtration modules, depending on its application as a desalination system of sea water or brines from a well or as purification system for industrial waters, and an ensemble of deposits with fluid input to be treated and two outlets, one for purified water and another for residues, suitable interconnected by means of the pertinent conducts and pumping systems for transporting residue. There is a centrifuge module (6); dryers (7) and (17) powered by the hot air produced by a cogeneration engine (12) and transported by air generators, and solid residue deposits, to which these arrive in a first or second phase of the process. It also has a heat circuit (11) powered by the heat from the refrigeration water of the aforementioned cogeneration engine (12) by means of exchangers (13) and high vacuum chambers (14) which have ejectors (15) powered by fresh water coming from the same production as the engine fluid, to extract the vapours produced by boiling. It also has an internal combustion engine (12), which is connected to an alternator (19) to produce electric energy, thus configured as a cogeneration plant, achieved with said engine (12), as well as the necessary power for operating the plant, it produces significant surplus power which can be exported to the Grid, taking advantage of the thermal power of the exhaust gases and the refrigeration of the engine to heat the closed heat circuit (11) and to heat the air in the dryers (17).

2. DESALINATION-PURIFICATION PLANT OF BRACKISH WATER AND INDUSTRIAL WASTE WITH ZERO LIQUID DISCHARGE, as per claim 1, **characterised by** the fact that the dryers (17) incorporate a condenser through which cold water is passed, and because part of the distilled water obtained from the dryers (17) is used to carry out a "sweeping" in order to clean the possible salt particles deposited in the circuit.

3. DESALINATION-PURIFICATION PLANT OF BRACKISH WATER AND INDUSTRIAL WASTE WITH ZERO LIQUID DISCHARGE, as per claims 1 and 2, **characterised by** the fact that when used as desalination plant it contains a reverse osmosis (1) module, from where the produced fresh water is sent to the main storage deposit (2) and the brine residue to another deposit (3) from where a flow of this brine is driven through a network of deposits (4) in which it will be subjected to different chemical treatments with the aim of freeing it of the encrusted salts, which are sent to a deposit (5) for the centrifugation in module (6) and dried in the dryers (7), in which the brine free of encrusted salt is sent to another deposit (8) to be subjected to another reverse osmosis process in a second plant (9), from where a fresh water flow departs towards the main storage deposit (2) and another concentrate of brine to a deposit (10) where it is subjected to a new chemical treatment.

4. DESALINATION-PURIFICATION PLANT OF BRACKISH WATER AND INDUSTRIAL WASTE WITH ZERO LIQUID DISCHARGE, as per claim 3, **characterised by** the fact that the salts obtained after the chemical treatment in the deposit (10) are sent to the deposit (5), and the brine without encrusted salt to the heat circuit (11), and from here to the high vacuum chambers (14) where, where upon reaching the programmed temperature an important vacuum is produced by means of ejectors (15) powered by fresh water from the same production as the engine fluid, extracting the vapours produced by boiling the brine entering the chambers; in which the non-evaporated brine water in the high vacuum chambers (14) circulated in the closed heat circuit (11), returning from these at the beginning of the circuit powered by the pumps, and does this circuit numerous times, so that once the adequate connectivity is reached, after successive evaporation processes, it is pumped to a concentrated brine deposit (16) named the brine lung, where it is pumped to the dryers (17) module through injectors that spray it, and on contact with the hot air, the brine water turns into vapour and when condensed is sent as distilled water to the main storage deposit (2) and the salt in powder form precipitates to the bottom of the dryers (17), and are then transported to a deposit or silo (18).

5. DESALINATION-PURIFICATION PLANT OF BRACKISH WATER AND INDUSTRIAL WASTE WITH ZERO LIQUID DISCHARGE, as per claims 3 to 4, is **characterised by** the fact that the water to be desalinated arriving from the reverse osmosis module (1) is pumped from the sea or a well, and because it circulates at a pressure of 4 bar through a primary circuit in which different parameters are measured, such as connectivity, pH, temperature, to pass to said module of (RO) (1).

6. DESALINATION-PURIFICATION PLANT OF BRACKISH WATER AND INDUSTRIAL WASTE WITH ZERO LIQUID DISCHARGE, as per claims 1 and 2, **characterised by** the fact that when used as a purification plant for industrial waters, it comprises a deposit (3), from where waste waters are sent to a filtration module (20). The filtered semi-solid residues are sent to the deposit (5) from where they pass to the centrifugation (6), and from where these humid semi-solids are sent to dryers (7) to be subjected to a drying process after which they are sent to the end residue deposit (18).

7. DESALINATION-PURIFICATION PLANT OF BRACKISH WATER AND INDUSTRIAL WASTE WITH ZERO LIQUID DISCHARGE, as per claim 6, **characterised by** the fact that the industrial water free of solid residue is sent to the deposit (4), to be then subject to suited chemical processes, then sent in the flow to the heat circuit (11) and from here to the high vacuum chambers (14) where upon reaching the programmed temperature a significant vacuum is produced by means of the injectors (15), extracting the vapours produced by boiling the industrial input residue from the high vacuum chambers (14); the fresh water produced is sent to the main storage deposit (2) and the very concentrated residue to the deposit (16) from where it is sent to the dryers (17) where the vapour from the water the industrial waste still contains is condensed and evaporates, and is sent as distilled water to the main storage deposit (2) and the dry waste to the solid residue deposit (18).
